(19) Europäisches Patentamt
European Patent Office
Office européen des brevets

(11) **EP 2 271 044 B1**

(12) **EUROPEAN PATENT SPECIFICATION**

(45) Date of publication and mention
of the grant of the patent:
**11.05.2016 Bulletin 2016/19**

(51) Int Cl.:
***H04L 29/06*** *(2006.01)*

(21) Application number: **10005252.1**

(22) Date of filing: **19.05.2010**

(54) **Anonymous transactions in computer networks**

Anonyme Transaktionen in Computernetzwerken

Transactions anonymes dans les réseaux informatiques

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **02.07.2009 IL 19966509**

(43) Date of publication of application:
**05.01.2011 Bulletin 2011/01**

(73) Proprietor: **Deutsche Telekom AG**
**53113 Bonn (DE)**

(72) Inventors:
• **Dolev, Shlomi**
**Omer 84965 (IL)**
• **Kopeetsky, Marina**
**Ashdod 77100 (IL)**

(74) Representative: **Flaccus, Rolf-Dieter**
**Flaccus · Müller-Wolff**
**Patentanwälte**
**Bussardweg 10**
**50389 Wesseling (DE)**

(56) References cited:
**EP-A2- 2 012 248     US-A1- 2002 103 999**

• J. Camenisch, A. lysyanskaya: "Efficient Non-transferable Anonymous Multi-show Credential System with Optional Anonymity Revocation", , 2001, XP002616976, Retrieved from the Internet: URL:http://www.zurich.ibm.com/~jca/papers/rz3295.pdf [retrieved on 2011-01-17]
• LYSYANSKAYA A ET AL: "Pseudonym Systems", SELECTED AREAS IN CRYPTOGRAPHY. ANNUAL INTERNATIONAL WORKSHOP, XX, XX, 10 August 1999 (1999-08-10), pages 184-199, XP002210267,
• S. Dolver, M. Kopeetsky: "Anonymous transactions in computer networks", , 10 August 2009 (2009-08-10), XP002616895, Retrieved from the Internet: URL:http://www.cs.bgu.ac.il/~frankel/TechRep/09-01/09-04.pdf [retrieved on 2011-01-17]
• DAVID CHAUM AND JAN-HENDRIK EVERTSE ED - ODLYZKO A M: "A Secure and Privacy-Protected Protocol for transmitting Personal Information Between Organizations", 1 January 1986 (1986-01-01), ADVANCES IN CRYPTOLOGY. SANTA BARBARA, AUG. 11 - 15, 1986; [PROCEEDINGS OF THE CONFERENCE ON THEORY AND APPLICATIONS OF CRYPTOGRAPHIC TECHNIQUES (CRYPTO)], BERLIN, SPRINGER, DE, PAGE(S) 118 - 167, XP002955991, * the whole document *
• E. GABBERP. GIBBONSY. MATIASA. MAYER: "How to Make Personalized Web Browsing Simple, Secure, and Anonymous", FINANCIAL CRYPTOGRAPHY: FIRST INTERNATIONAL CONFERENCE, FC, vol. 97, 1997, XP002616978,

## Description

### Field of the Invention

The present invention relates to the field of transactions over distributed computer networks. In particular the invention relates to transactions wherein it is necessary to confirm to two or more entities that a user known to one entity as "user A" and to another entity as "user B" is the same person while maintaining the user's anonymity.

### Background of the Invention

Publications and other reference materials referred to herein
are numerically referenced in the following text and respectively grouped in the appended Bibliography which immediately precedes the claims.

Due to the fast development of the Service Oriented Architecture (SOA) and web services in supporting different multiphase transaction processes, the issue of providing services which preserve users anonymity, is very important nowadays. SOA is defined as a group of services that communicate with each other. The process of communication involves a number of services coordinating a common activity. Anonymity is defined as preventing the association of any personal data communicated using a SOA with a specific client.

Several computationally and communication efficient protocols for anonymous communication in computer methods have been proposed. Examples of such protocols are found in [4] and [5]. These protocols can serve as point to point communication primitive procedures for comprehensive anonymous transactions schemes.

A system for anonymous personalized web browsing has been proposed in [7]. In this paper a new cryptographic function, named the Janus function is described. The Janus function satisfies a number of properties, including anonymity, consistency, secrecy, uniqueness of an alias, and protection from creation of dossiers, thereby providing the user anonymity in the computationally secure aspect. This function translates the user name (for example, e-mail address) to a unique user alias. The computation of the Janus function and the translation of the real user name to the corresponding alias are performed by the centralized Janus proxy server which is usually placed in the firewall which connects a certain Intranet to the Internet. One of the drawbacks with the Janus function is that the use of a central server yields the existence of a bottleneck and a single point of failure, which our scheme avoids.

J. Camenisch, A. Lysyanskaya, Research Report, "Efficient Non-Transefable Anonymous Multi-Show Credential System with Optional Anonymity Revocation", discloses a practical anonymous credential system. This scheme is a practical solution that allows a user to unlinkably demonstrate possession of a credential as many times as necessary without involving the issuing organization (Certificate Authority). In addition, the users are prevented from sharing their identity by means of all-or-nothing sharing: a user who allows a friend to use his/her identity once, gives him the ability to use all of his/her credentials. The scheme of Camenisch and Lysyanska satisfies separability: all organizations (that grant and verify credentials of users) can choose their cryptographic keys independently of each other. The credential system is based on the Public Key Infrastructure (PKI) which is a computationally and communicationally expensive process.

The Patent Application Publication No. US 2002/103999 A1 (Camenisch, A. Lysyanskaya, Efficient Non-Transefable Anonymous Multi-Show Credential System with Optional Anonymity Revocation, 1 August 2002) describes the same subject matter as the same as the research report mentioned above.

A .Lysyanskaya, R. L. Rivest, A. Sahai, S. Wolf ,"Pseudonym Systems", Selected Areas in Cryptography, pages 184-199, 2001, is one of the earliest publications on anonymous credentials. It presents a pseudonym system in which the system is protected against dishonest users who collectively share their pseudonyms and credentials (share their identities). In this system the involvement of a Trusted Authority is significantly smaller than in the systems described at Camenich et al.

D. Chaum, J. H. Evertse. "A Secure and Privacy Protecting Protocol for Transmitting Personal Information between Organizations". Advances in Cryptology- CRYPTO'86, LNCS 163, pp. 118-167, 1987, describes a Multi-Party cryptographic protocol and a proof of its security is proposed in this paper. This protocol is based on PKI and one way function. Its participants are users and organizations, which are not assumed to trust each other. The protocol implements a credential mechanism, which is used to transfer personal information about users from one organization to another, while allowing individuals to retain substantial control over such transfer. A formal credential mechanism (which protects user's privacy-anonymity), is based on PKI and RSA cryptosystem. The proposed scheme is not resistant again collusions of dishonest users, and it is heavy relied on involving of Trusted Authority.

EP 2 012 248 A2 (Nec China Co LTD [CH], 7 January 2009), discloses a method and apparatus for distributed authorization by means of anonymous credentials, which includes different authorities such as Pseudonym Authority, Resource Holder, Resource Protector. The system's structure is very complex. Granting pseudonyms, access rights (credentials), verification of credentials are performed by different servers. The computationally and communicationally expensive PKI and Zero Knowledge Proofs are used in this system.

All the methods described above have not yet provided satisfactory solutions to the problem of effecting secure transactions on the Internet because they address only anonymous point to point communication [4] and [5] and/or pseudonym support [7].

It is therefore a purpose of the present invention to provide new protocols for providing multiphase transactions between a user and a set of servers while maintaining the user's anonymity.

Further purposes and advantages of this invention will appear as the description proceeds.

**Summary of the Invention**

The present invention is a method for anonymously carrying out multiphase transactions over a distributed computer network. The network comprises: a computer of a trusted authority, a user's computer, and servers of one or more service providers, wherein each of the computers/servers in the network comprises dedicated software that contains information, including a one-way function, and instructions necessary to execute the method. The method is carried out as follows:

    a. the user's computer acts on behalf of the user to establish contact with the computer of the trusted authority;
    b. said computer of said trusted authority provides said user's computer with either:

        i. a secret random number; or
        ii. a hard to produce evidence;

    c. a transaction is started on behalf of the user by said user's computer which locally produces a unique pseudonym for each server of said one or more service provider that will be involved in the transaction, wherein said pseudonym is the output of said one-way function included on it's dedicated software which receives as an input either:

        i. said secret random number and the corresponding IP address of said server of said service provider; or
        ii. a commitment to produce said hard to produce evidence and said corresponding IP address of said server of said service provider;

    d. said user's computer uses said pseudonyms to communicate anonymously with said servers of said service providers;
    e. said user's computer initiates the carrying out of said transaction on behalf of the user by sending a resolve message based on either:

        i. said secret random number XOR said IP address of said server of said service provider; or
        ii. said commitment to produce said hard to produce evidence to each of said servers;

    f. said transaction is completed when:

        i. each of said servers of said service providers sends said secret random number revealed from said resolve message sent to it by said user's computer in step e.i. to said computer of said trusted authority, which confirms to each of said servers that the same user has interacted with each of them; or
        ii. said user's computer provides to each of said servers a computationally secure Interactive Zero Knowledge Proof ZKP, that proves that said user is the same anonymous identity that knows said evidence in said resolve message sent by said user's computer in step e.ii.

In an embodiment of the method of the invention, the trusted authority limits the number of times that the secret random number provided to the user's computer can be used.

In an embodiment of the method of the invention, in step b the computer of the trusted authority provides the user's computer with a second secret random number, thereby allowing the transaction to be carried out in an unlinkable mode wherein the servers of the one or more service providers do not know that the same anonymous user previously requested a service from them.

In an embodiment of the method of the invention, if in step b the computer of the trusted authority has provided the user's computer with a secret random number, then the user can instruct his/her computer not to complete the transaction.

In an embodiment of the method of the invention, the hard to produce evidence is a very large prime number.

c. the user initiates the carrying out of the transaction by sending from his computer to each of the servers a message that reveals part of the pseudonym to the servers;

d. the transaction is completed when each of the servers sends the revealed part of the pseudonym to the computer of the trusted authority, which confirms to each of the servers that the same user has interacted with each of them.

An embodiment of the method of the invention is carried out as follows:

a. the user uses his computer to establish contact with the computer of the trusted authority, which provides the user's computer with a hard to produce evidence;

b. a transaction is started by the user who uses the one-way function included in the software on his computer to produce locally a unique pseudonym for each service provider that will be involved in the transaction, wherein the pseudonym is produced from the hard to produce evidence and the corresponding *IP* address of the server of the service provider, wherein the user uses the pseudonyms to - communicate anonymously with the servers of the service providers;

c. the user initiates the carrying out of the transaction by sending from his computer to each of the servers a message that reveals part of the pseudonym to the servers and the user completes the transaction by providing to each of the servers a computationally secure Interactive Zero Knowledge Proof he is the same anonymous identity that knows the hard to produce evidence.

In this latter embodiment the hard to produce evidence is a very large prime number.

All the above and other characteristics and advantages of the invention will be further understood through the following illustrative and non-limitative description of preferred embodiments thereof, with reference to the appended drawings.

## Brief Description of the Drawings

- Fig. 1a to Fig. 1d schematically show the four stages in executing a transaction according to the $ATP_1$ protocol;
- Fig. 2 is a listing of the steps of the $ATP_1$ protocol for the User $U_i$ and for the Server $S_j$:
- Fig. 3a to Fig. 3d schematically show the three stages in executing a transaction according to the $ATP_2$ protocol; and
- Fig. 4 is a listing of the steps of the $ATP_2$ protocol for the User $U_i$ and for the Server $S_j$.

## Detailed Description of Preferred Embodiments

The invention is a computer implemented method for anonymously carrying out multiphase transactions over distributed computer networks that comprise a user's computer and servers of one or more service providers that are interconnected by communication channels. Each of the computers/servers in the network comprises dedicated software that contains the information and instructions necessary to execute the method of the invention. According to the invention, an entity, known as a user $U$, may execute transactions with a group of entities, known as servers $S^U$ User $U$ is able to prove, without revealing information concerning his/her identity, that he/she is the one that accessed each entity in $S^U$.

A transaction is defined as a two stage operation. During the first stage, user $U$ anonymously authenticates himself/herself by means of a unique pseudonym to the other servers $S^U$ that are involved in the transaction. Each user $U$ has a one way function Fby means of which he/she can produce from a random seed and the *IP* address of each other entity $S$ involved in the transaction a unique user name and password. The pseudonym, which is a fictitious alternative to a person's legal name, is generated by a user for accessing any server in a group of servers. The pseudonym is unique for each user-server pair. The uniqueness of the pseudonym is provided by the server's *IP* address which is one of the parameters of the one way function that, together with a seed, generates a pseudo random sequence. The user $U$ does not have to maintain any information about the server in order to reproduce the user name and password used for accessing a given server $S$. In the second stage $U$ is able to prove to each server S from the group of servers $S^U$ that the same entity, i.e. himself/herself, interacted (during the first phase) with all the servers $S^U$ and therefore has made all of the preparations necessary to execute the (composite) transaction.

The invention has two embodiments each of which is a protocol for anonymous transactions. The first embodiment is known as Anonymous Transactions Protocol ($ATP_1$). It is based on the approval of a Trusted Authority (*TA*) for the transaction resolution. The *TA* may limit the number of possible transactions carried out by the same user. The transactions are performed in two modes: unlinkable and linkable transactions. The different user's transactions can be unlinkable in the sense that different entities from a set of network entities do not know that the same anonymous user requested a service from them. The linkability of transactions may also be satisfied when the entities are provided with tools to verify that they have received service from the same anonymous user. The mode of the transactions is chosen by the user who accesses the *TA* in order to carry out the transactions.

The second embodiment, known as the Advanced Transactions Protocol $ATP_2$ uses the *TA* in the initialization stage only, while the anonymous transactions are carried out by a user without involving the *TA* In the advanced scheme the *TA* generates a hard to produce evidence *EVID* for each user *U* e.g., a problem instance with or without a solution. The user's pseudonym in this scheme is based on the server's *IP* address, a hard to produce evidence *EVID,* and one way function granted to the user by the *TA* during the system initialization. The pseudonym includes the anonymous user name (login) and the password. The pseudonym is created as a pseudo random sequence. This pseudo random sequence is generated by the one way function and a seed calculated by XOR-in the server's IP address and a commitment to evidence *EVID.* In order to perform the transaction resolution and prove to the group of servers $S^U$ that a user *U* processed all accesses needed to complete the transaction, the user performs an interactive Zero Knowledge Proof to prove that he/she knows *EVID* which is computationally hard to produce by the polynomial time adversary. The advanced $ATP_2$ uses Zero-Knowledge proof techniques to repeatedly identify a user *U* without exposing the *EVID* and its solution, therefore avoiding identity theft. Hence, the *TA* in $ATP_2$ is involved only once during the system initialization. Because the Zero Knowledge Proof techniques relied upon in the second embodiment of the invention are very computationally expensive Zero, this embodiment is implementable only by very powerful computers.

Compared with the prior art Janus system, the protocols of the invention have the following advantages:

- They provide complete anonymity between all entities in the network: a user who/which performs a transaction, a group of servers participating in the transaction, and a Trusted Authority.
- Transactions can be performed without involving a Trusted Authority. The $ATP_2$ protocol involves the *TA* only once during the system initialization. The $ATP_2$ protocol's functionality is implemented by the user who locally computes the pseudonym and resolves the transaction by himself/herself.
- The invention combines low computational cost with a very high security level. The first embodiment continuously uses the pseudo random sequences generation by the cryptographic one way functions and *XOR* calculation as a source for preserving the security level of the anonymous user's pseudonym. Therefore, low computational power is required in comparison with standard cryptographic techniques. The Zero-Knowledge proof performed by the user in the transaction resolution stage computationally prevents an adversary from impersonating the legal user. In contrast to the Janus system, the protocols of the invention do not rely on Secure Socket Layer (SSL) [13] or any other security protocol that assumes the involvement of the Trusted Authority.
- The invention provides permanent validity of the secret number granted to the users by the *TA.* The secret number granted by the *TA* to the user in the $ATP_1$ protocol and the corresponding hardly producible *EVID in* $ATP_2$ are valid forever, and only the user's encryptions of the secret value are updated during different transactions.
- The invention allows linkability and unlinkability of the transactions. The encryption scheme for the pseudonym generation may be chosen adaptively on the user's demand. The user may choose the unlinkable mode in which none of the network entities (users and servers) can identify that they have communicated with the same anonymous identity during different transactions. The user may also perform transactions in a linkable mode in which the invention provides the other entities with tools that allow the user's identity to remain anonymous while allowing the other entities to know that the same player has executed different transactions with them.

The formal system description of the security model for anonymous transactions used in both embodiments of the invention is now described. The anonymous network comprises a set of network entities (users and servers) and a Trusted Authority *TA.* The set of network entities includes two sub-sets that may intersect, i.e. the set of users $U = \{U_1,..., U_n\}$ and the set of servers $S = \{S_1,...S_n\}$. A user $U_i \in U$ initiates and carries out anonymous transaction with the servers from the corresponding server set $S^{U_i}$. The transaction is defined as a two stage operation:

(a) The first stage is the authentication stage. During this stage a user $U_i$ anonymously-authenticates himself/herself and interacts with each server $S_j$ from the server set $S^{U_i}$.
(b) The second stage is the transaction resolution. In this stage $U_i$ proves to each server from the $S^{U_i}$ set that he/she is the same identity that provided authentication and visited all the servers from $S^{U_i}$ during the previous stage.

Note that this stage is optional in the sense that after anonymously obtaining information about the transaction from some or all of the service providers in the first stage, $U_i$ can decide not to go through with the transaction simply by not executing the second stage of the method.

According to the method described in [4], two cryptographic primitives are used: *encryption* and *authentication. Encryption* guarantees the secrecy of messages, while *authentication* ensures that if a sender sends a message to a receiver and an adversary alters this message, then with overwhelming probability the receiver can detect this fact (see [4] for details and [9] for formal definitions). The $k^{th}$ transaction carried out by the user $U_i$ with the servers from the corresponding server set $S^U_i$ is denoted as $T^k_i$. Each $T^k_i$ starts with the authentication message $t_{ij}$ sent by $U_i$ to each $S_j \in S^U_i$, and ends when each $S_j \in S^U_i$ confirms the transaction resolution by sending the message $r_i = Confirm^k_i$, or rejects it by sending the message $r_i = Reject^k_i$. The message $t_{ij}$ consists of the anonymous user name and password pair $(u_{ij}, p_{ij})$ which is, in essence unique for a given user $U_i$ and a server $S_j$. The transaction resolution is initiated by the user $U_i$ and is performed by sending the message $Resolve^k_i$ to each $S_j \in S^U_i$.

The security parameter in the model is $\epsilon$ which is equal to the length of the seed $c_{ij}$ that generates the pseudo random sequence for the anonymous user name and password. The larger $\epsilon$ is compared to the pseudo random sequence length, the higher is the computational security level of the scheme.

Given the features of the model, the basic anonymous transactions protocol $ATP_1$, and the advanced $ATP_2$ protocol are described. The transaction resolution in $ATP_1$ is executed by the $TA$ when each server $S_j$ passes the $Resolve^k_i$ message received from $U_i$ to the $TA$. The $TA$ confirms the transaction correctness by sending the message $r_i = Confirm^k_i$ or rejects the transaction by sending the $r_i = Reject^k_i$ to all servers from the $S^U_i$ set.

The transaction resolution provided by $ATP_2$ is performed by the user $U_i$ while $U_i$ proves that he/she knows the hardly producible evidence $EVID$ to each server from the corresponding server set $S^U_i$ in the interactive Zero Knowledge Proof (ZKP). A polynomial time restricted semi·honest adversary $A$ [14] is assumed. Entity $A$ can impersonate the legal user and therefore can get access to the servers' resources. $A$ can also try to prove to the group of servers that he/she is the legal user that initiated the transaction.

The requirements for the $ATP_1$ and $ATP_2$ protocols are defined as follows:

($R_1$) · Anonymicity: If a user $U_i$ performs a transaction, neither the network entities, including the $TA$ and the servers, get information about $U/s$ real identity.

($R_2$) - Anonymous authentication to $TA$: The user $U_i$ authenticates himself/herself to the $TA$ and gets the credit for the execution of a certain number of transactions via an anonymous secure channel.

($R_3$) - Pseudonym uniqueness: the pseudonym which is composed of the user's user name and password is unique for any user-server pair participating in the transaction.

($R_4$) - Pseudonym consistency: The user pseudonym is consistent for each server in the sense that the server can recognize the pseudonym during repeated visits by the user in the same transaction.

($R_5$) - Atomicity: The transaction resolution is executed simultaneously for all servers in the corresponding server set.

($R_6$) - Optionality of the transaction mode (linkability and unlinkability of a transaction): User can choose for himself/herself one of two transaction modes: linkable and unlinkable. In the linkable mode the servers from the corresponding server set can verify that the same user executed a certain number of transactions with them, whereas in the unlinkable mode the servers have no tools to identify that the same anonymous identity executed the transactions.

The security model and the corresponding requirements are defined as a function of the security parameter $\epsilon$ that assures the computationally secure level of the anonymous transactions.

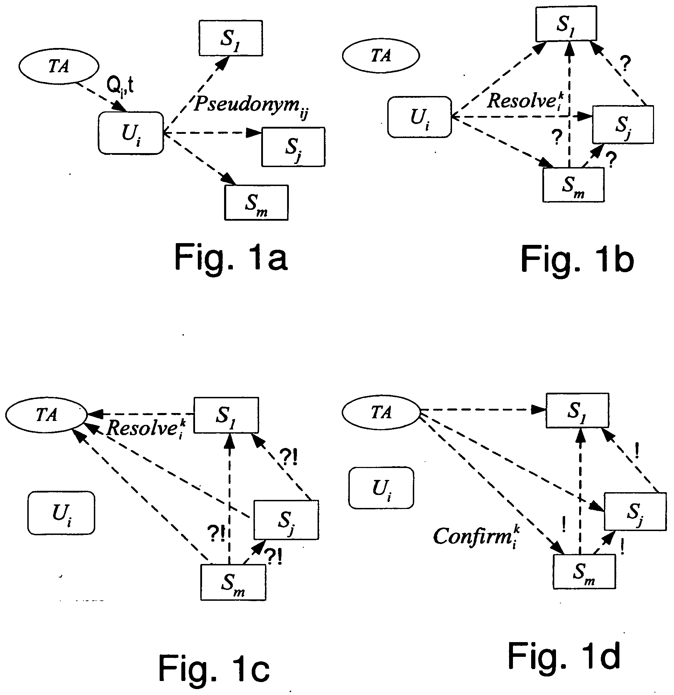

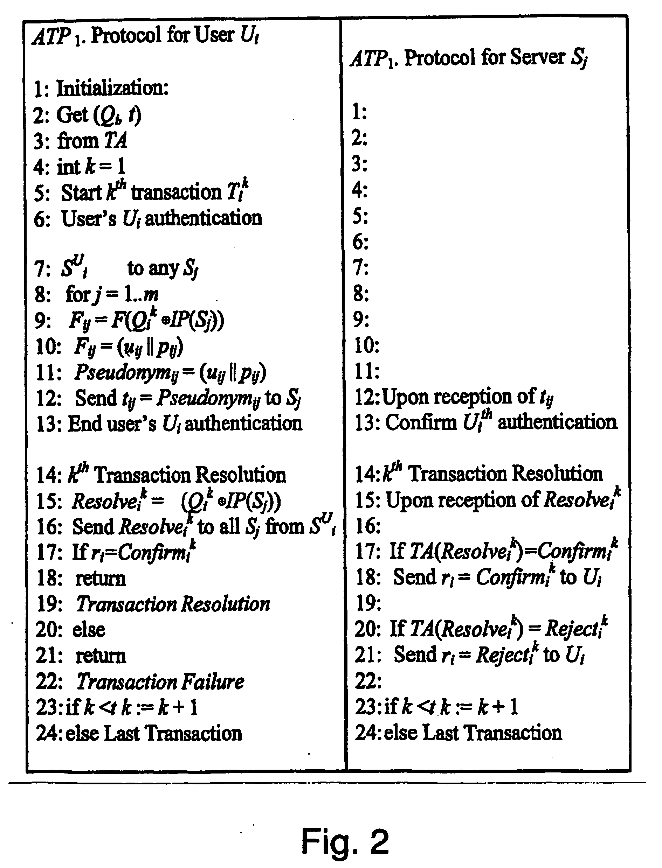

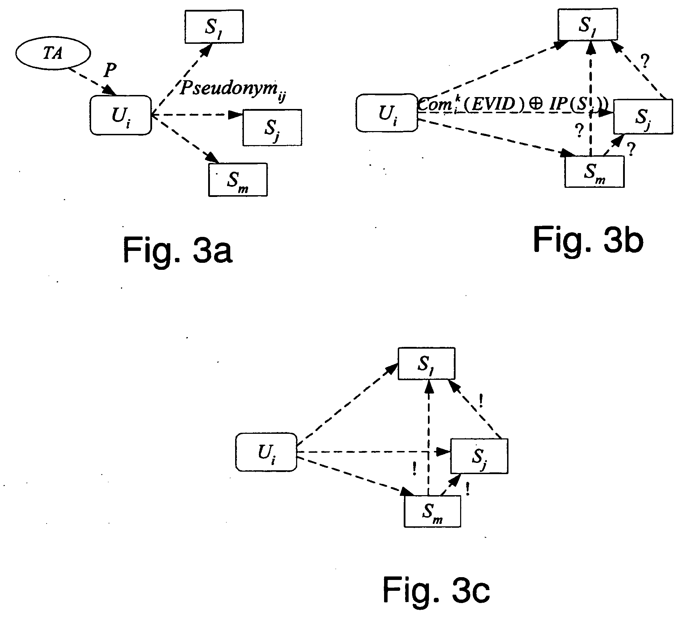

The first embodiment of the invention, i.e. the $ATP_1$ protocol is described in Figs. 1a to 1d and 2, wherein Fig. 1a to Fig. 1d schematically show the four stages in executing a transaction according to the $ATP_1$ protocol and Fig. 2 is a listing of the steps of the $ATP_1$ protocol for the User $U_i$ (on the left) and for the Server $S_j$ (on the right). Note that in Figs. 1b to 1c, 3b, and 3c the question marks signify unknown relations and the exclamation points signify revealed relations.

In order to carry out a certain transaction with a group of servers $S^U_i$ a user $U_i \in U$ performs the following operations:

(1) Initialization - stage: The user establishes contact with the trusted authority $TA$, which provides $U_i$ with a secret random number $Q_i$, which can be used for $t$ possible transactions. It is assumed a common knowledge of a one-way function $F$, which is provided by the software on all of the user, server, and TA computers. It is to be noted that anonymous communication is provided between the $TA$ and the user because the $TA$ gets no information about the user's identity. (Fig. 1a and Fig. 2, lines 1-4)

(2) In order to start the $k^{th}$ transaction $Pseudonym_{ij}$ that consists of the anonymous user name $u_{ij}$ and password $p_{ij}$ is locally computed on the computer of $U_i$.

$$Pseudonym_{ij} = (u_{ij} \| p_{ij}) = F((Q_i^k) \oplus IP(S_j))$$

Wherein, $IP(S_j)$ is the corresponding $IP$ address of the server $S_j$, and $Q_i^k$, $k = 1,...,t$ is the $k^{th}$ sub-string of the $Q_i$ string. It should be noted that if the $Q_i$ string is short, $Q_i$ may be used as a seed for generating a pseudo random

sequence $c_F(Q_i)$ by the $F$ function for any $k^{th}$ transaction instead of the $Q_i^k$ sub-string. In this case $c_F(Q_i)$ should be divided on $t$ sequential sub-strings $c_F^1(Q_i),...,c_F^t(Q_i)$. Each $c_F^k(Q_i)$ will generate the user name and password pair for any $k^{th}$ user's transaction. Assuming that $F$ is a proper collision-resistant one way function [14], the generated $Pseudonym_{ij}$ is unique for all interactions between $U_i$ and any $S_j \in S^U_i$. It is noted that the $Pseudonym_{ij}$ of user $U_i$ is different for each server $S_j$ from $S^U_i$, and therefore the servers do not know whether $U_i$ is the same user that visited any other server in the corresponding set of servers. (Fig. 1a and Fig. 2, lines 5-13).

(3) In order to convince each server from the $S^U_i$ set that $U_i$ is the same identity that visited other servers from the server set, the computer of $U_i$ opens the part $Q_i^k$ of the secret $Q_i$, or the sub-string $c_F^k(Q_i)$ of the pseudo random sequence $c_F(Q_i)$, respectively used in the $k^{th}$ transaction by sending the message $Resolve_i^k = (Q_i^k) \oplus (IP(Sj))$ (or $Resolve_i^k = c_F^k(Qi) \oplus IP(Sj)$, respectively) to all servers (Fig. 1b and Fig. 2, lines 14-16).

(4) Transaction resolution is performed simultaneously when the computer from each $S_j$ sends the $Q_i^k$ (or $c_F^k(Q_i)$) revealed from the $Resolve_i^k$ message which was previously received from $U_i$ to the computer of to $TA$ The computer of $TA$ verifies whether $Q_i^k$ (or $c_F^k(Q_i)$) is the correct $Q_i^{th}$ sub-string, or correct sub-string generated by $F$ from the secret number $Q_i$. If so, then the computer of $TA$ sends $Confirm_i^k$ message to each computer of $S_j$ from $S^U_i$ and executes the $k^{th}$ transaction $T_i^k$. Otherwise, the computer of $TA$ sends $Reject_i^k$ message to each computer of $S_j$, and rejects $T_i^k$. (Fig. 1c, Fig. 1d, and Fig.2, lines 17-22).

In one mode of operation of the $ATP_1$ protocol user $U_i$ may choose to allow his/her different transactions $T_i^k$ and $T_i^l$, $k < 1$ with the same group of servers $S^U_i$ to be linkable in the sense that after executing the $T_i^k$ transaction any $S_j$ from $S^U_i$ can be convinced, i.e. know with overwhelming probability, that the $T_i^k$ and $T_i^l$ transactions have been performed by the same anonymous user. One method of allowing linkability is to use the authentication scheme suggested by Lamport [10]. In this case, the $k^{th}$ encryption of the secret $Q_i$ used in transaction $T_i^k$ equals $F^{tk}(Q_i)$ and the corresponding user name and password pair is $(u_{ij}, p_{ij}) = F(F^{t-k}(Q_i) \oplus IP(S_j))$. It should be noted that the one way function $F$ generates the pseudo random sequence $F(Q_i)$ from the seed $Q_i$. The maximum number of the transactions permitted to the user $U_i$ by the $TA$ is $t$ and $F^{t-k}(Q_i)$ denotes $t - k$ sequential applications of the one way function $F$ on the secret seed $Q_i$. The value revealed by the user $U_i$ in the $Resolve_i^k$ message is, consequently, the internal seed $F^{t-k}(Q_i) \oplus IP(S_j)$ used to compute $(u_{ij}, p_{ij})$ If the user $U_i$ has carried out $T_i^k, T_i^{k+1},...,T_i^l$ sequential transactions with the servers from the $S^U_i$ set, then $U_i$ remains linkable after any transaction that follows the $T_i^k$ transaction because each $S_j \in S^U_i$ can verify that $Q_i^{th}$ encryptions $F^{t-k}(Q_i)$ and $F^{t-l}(Q_i)$ used in the $k^{th}$ and $l^{th}$ transactions, respectively satisfy the equality $F^{t-k}(Q_i) = F^{tk}(F^{t-l}(Q_i))$ by repeatedly applying $l - k$ times the one way function $F$ on $Q_i$.

In a second mode of operation of the $ATP_1$ protocol user $U_i$ may choose not to allow his/her different transactions $T_i^k$ and $T_i^l$, $k < l$ with the group of servers $S^U_i$ to be linkable. In this case the $TA$ provides $U_i$ with the pair $(Q_i, W_i)$ of secret seeds. The user name and password of user $U_i^{th}$ in the $T_i^k$ transaction are calculated in the following manner

$$(u_{ij}, p_{ij}) = F(F^{t-k}(Q_i) \oplus F^k(W_i) \oplus IP(S_j)).$$

In doing so, the pseudo random sequence $F^k(W_i)$, generated by the secret seed $W_i$ by the $k$ sequential compositions of the one way function $F$, provides the one way "lock" $F^{tk}(Q_i)$ of the encrypted secret $Q_i$.

It is noted that the use of the different seeds $Q_i^1, Q_i^2, Q_i^t$ in the different transactions divided from the secret string $Q_i$, also provide unlinkability of the transactions. The reason is that the different independent seeds, e. g. $Q_i^k$ and $Q_i^l$, result in the different independent pseudo random sequences $F(Q_i^k)$ and $F(Q_i^l)$, respectively.

The security parameter $\epsilon$ equals to the length of the seed $Q_i$ or $W_i$, which are used as the arguments of the $F$ function for generating the pseudo random sequence. Note that the larger $\epsilon$ is, the higher the encryption level provided in the transactions.

It is now shown that $ATP_1$ satisfies the model requirements $(R_1)$ to $(R_6)$ listed herein above. $ATP_1$ is computationally secure regarding the security parameter $\epsilon$ that determines the computational security level. and thus provides the anonymous transactions in the computationally secure manner. Assume that user $U_i \in U$ wishes to carry out at most $t$ transactions with the network servers from the $S^U_i$ set. Assume next that the $TA$ permits the user $U_i$ at most $t$ possible transactions with the groups of servers, and provides $U_i$ with a secret number $Q_i$ and a one way function $F$. According to the $ATP_1$ protocol the corresponding message generated for any $l^{th}$ transaction, $l<t$ with a server $S_j \in S^{Ui}$ is:

$$t_{ij} = (u_{ij}, p_{ij}) \text{ while } (u_{ij}, p_{ij}) = F((Q_i^l) \oplus IP(S_j))$$

(Fig.2, lines 1-4, $ATP_1$ Protocol for User $U_i$).

(R1) - Anonymicity: For any $U_i \in U$ the anonymity of the generated pseudonym $(u_{ij} \| p_{ij})$ is provided by the one way function $F$ and the corresponding encryption $F(Q_i^l)$ of the $Q_i^l$ sub-string of the secret number $Q_i$. The security parameter $\in$ which is equal to the length of the seed $Q_i^l$, determines the computational security level. The larger $\in$ is, the higher is the $ATP_1$'s security level.

Assume that the goal of the adversary $A$ is to break the user's $U_i$ pseudonym sent in the $t_{ij}$ message and to reveal the secret string $Q_i$ or its sub-string $Q_i^l$ (Fig.2, lines 6-13, $ATP$ Protocol for User $U_i$). In order to succeed in his/her attempt, $A$ must calculate $F^1$ from $t_{ij}$. Since $F$ is a proper publicly known one way function, the calculation of its inverse is computationally infeasible [14].

$(R_2)$ - Anonymous authentication to $TA$: During the initialization stage the $TA$ communicates with $U_i$ via a secure anonymous channel (Fig. 2, lines 1-3, $ATP_1$ Protocol for User $U_i$). This means that the $TA$ does not get any information about the identity of $U_i$. Moreover, the next user's transactions are resolved by the $TA$ based only on a secret $Q_i$ and the encryption function $F$. As a matter of fact, neither the sub-string $Q_i^l$ of $Q_i$ nor $F$ contains information about a user's identity (Fig. 2, lines 14-23, $ATP_1$ Protocol for Server $S_j$).

$(R_3)$ - Pseudonym uniqueness: The user's $U_i$ pseudonym for any $l^{th}$ transaction $T_i^l$ is generated by the one way function $F$ from the seed $Q_i^l \oplus IP(S_j)$. The seed's uniqueness is satisfied by the $IP$ address $IP(S_j)$ of server's $S_j$, which is one of $Q_i^l \oplus IP(S_j)$ seed components. Assuming that $F$ is a proper collision· resistant one way function ([14]), the generated pseudo random sequence is unique for any $(U_i, S_j)$ pair.

$(R_4)$ - Pseudonym consistency: The user's pseudonym generated by the user $U_i$ for visiting any server $S_j \in S^U_i$ is the same for any repeated visit $S_j$ during the same transaction. Hence, the user's anonymous pseudonym is consistent for any transaction.

$(R_5)$ - Atomicity: The $T_i^l$ transaction resolution is initiated upon demand by $U_i$ and is performed by the $TA$ upon reception of the same message $Resolve_i^l = F(Q_i^l)$ from all the servers participating in the $T_i^l$ transaction. The $TA$ simultaneously verifies that $F(Q_i^l)$ is the proper encryption of the secret $Q_i$ sub-string $Q_i^l$ and sends the $r_i = Confirm_i^l$ message to all servers from $S^U_i$ set in parallel (Fig. 2, lines 18-19, $ATP_1$ Protocol for Server $S_j$). If $F(Q_i^l)$ has been corrupted for at least one server $S_j$, a transaction reject is performed by the $TA$ simultaneously to all servers from $S^U_i$ by sending the message $r_i = Reject_i^l$ (Fig. 2, lines 14-18, $ATP_1$ Protocol for Server $S_j$).

$(R_6)$ - Optionality of the transaction mode: *Linkability of the transactions:* Assuming that the user $U_i$ chooses the linkable mode. In this case $U_i$ calculates $t + 1$ sequential encryptions $F(Q_i), F(F(Q_i)),...,F^t(Q_i)$ of the secret number $Q_i$ [10]. Assuming that the user $U_i$ has provided $T_i^k, T_i^{k+1},...,T_i^l$ sequential transactions with the servers from the $S^U_i$ set. $U_i$ remains linkable after any transaction that follows $T_i^k$ because each $S_i \in S^U_i$ can verify that the secret encryption $F^{t-k}(Q_i)$ used in the $k^{th}$ transaction equals to the $F^{t-k}(Q_i) = F^{t-k}(F^{t-l}(Q_i))$, by repeating application of a one way function $F$ on $Q_i$.

*Unlilkability of the transactions:* Assuming that the user $U_i$ has been granted a pair of secret seeds $(Q_i, W_i)$. The user name and password of the $U_i^{th}$ user in the $T_i^k$ transaction are calculated as $(u_{ij}, p_{ij}) = F(F^{t-k}(Q_i) \oplus F^k(W_i) \oplus IP(S_i))$.

Assuming that the goal of a certain server $S_j$ from the corresponding server set is to reveal whether the same anonymous identity interacted with the server before in a number of transactions, e.g. the $k^{th}$ and $l^{th}$ transactions, where $k < l$. In order to trace a user, $S_j$ has to link the corresponding user names and passwords used in the $k^{th}$ and $l^{th}$ transactions, respectively. In order to compare the pseudo random sequences generated by the one way function $F$ from the seeds $F^{t-k}(Q_i) \oplus F^k(W_i)$ and $F^{t-l}(Q_i) \oplus F^l(W_i)$, $S_j$ must invert the external envelope $F$ of the different seeds given. Based on the assumption that $F$ is a one way function, its inversion is computationally infeasible by the polynomial time restricted adversary $A$. In such a way the pseudo random sequence $F^k(W_i)$, generated by the secret number $W_i$ by the $k$ sequential compositions of the one way function $F$ with the initial seed $W_i$, provides the one way "lock" $F^{tk}(Q_i)$ of the encrypted secret $Q_i$.

The advanced anonymous transactions protocol $ATP_2$ allows the user to carry out and resolve the anonymous transactions by himself/herself. Hence, the $TA$ is involved in the system only once during the initialization stage. The idea is to provide a user with an evidence which is hard to produce, say a very long prime number [3]. Only a powerful entity may have enough resources to obtain such evidences.

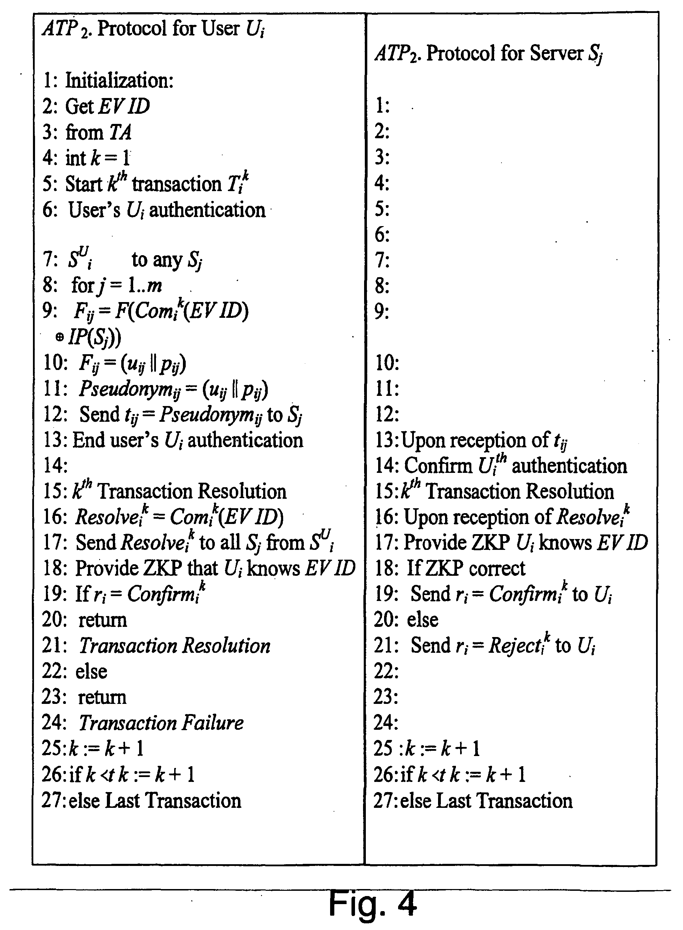

The second embodiment of the invention, i.e. the $ATP_2$ protocol is described in Figs. 3a to 3d and 4, wherein Fig. 3a to Fig. 3d schematically show the three stages in executing a transaction according to the $ATP_2$ protocol and Fig. 4 is a listing of the steps of the $ATP_2$ protocol for the User $U_i$ (on the left) and for the Server $S_j$ (on the right).

Referring to Fig. 3 and Fig. 4, the user $U_i$'s transaction with the servers from the corresponding set $S^U_i$ is executed in the following way:

(a) Initialization Stage: As in the $ATP_1$ case, a certain proper one way function $F$, e.g. RSA, that is known to all computers/servers in the network generates the pseudo random sequence for the anonymous user's pseudonym. An evidence $EVID$ which is hard to produce, is also granted by the TA to $U_i$. After the initialization stage the $TA$ leaves the system forever (Fig. 3a and Fig. 4, lines 1-3).

(b) In order to initiate the $T_i^k$ transaction, $U_i$ visits the servers from the $S^{U_i}$ set and authenticates himself/herself to each $S_j \in S^{U_i}$ by means of the anonymous $Pseudonym_{ij} = (u_{ij}, p_{ij})$. Here $u_{ij}$ and $p_{ij}$ are the anonymous user name and password, as in the $ATP_1$ case. Now the anonymous $U_i^{th}$ identity is computed as $Pseudonym_{ij} = (u_{ij}, p_{ij}) = F(Com_i^k(EVID) \oplus IP(S_j))$. As in the $ATP_1$ case, $IP(S_j)$ is the $S_j^{th}$ IP address, and $F$ is the one way function provided to the user by the $TA$ during the initialization stage. The parameter $Com_i^k(EVID)$ is the $k^{th}$ commitment to the instance $EVID$ [8]. Compared to the $ATP_1$ protocol, the computationally hard evidence $EVID$ is granted to $U_i$ by the $TA$ instead of a secret random number. As in the $ATP_1$ case the message sent by $U_i$ to each $S_j$ is $t_{ij} = (u_{ij}, p_{ij})$ (Fig. 3a and Fig. 4, lines 4-13).

(c) In order to resolve the $T_i^k$ transaction, $U_i$ opens and sends each $S_j \in S^{U_i}$ in the $Resolve_i^k$ message the $Com_i^k(EVID)$ string (Fig. 3b and Fig. 4, lines 15-17). The $T_i^k$ transaction is resolved by the user when $U_i$ provides the computationally secure Interactive Zero Knowledge Proof (ZKP) [8] that $U_i$ is the same anonymous identity that knows $EVID$ (Fig. 3c and Fig. 4, lines 15-24).

It is now shown that $ATP_2$ satisfies the model requirements ($R_1$) to ($R_5$) listed herein above. The $ATP_2$ protocol's computational security level is determined by the security parameters of the ZKP performed by the user to the servers from the corresponding servers' set and therefore provides the anonymous transactions in the computationally secure manner without involving the $TA$.

The anonymous user's pseudonym in the $ATP_2$ is constructed in nearly the same manner as in the $ATP_1$ case. The only difference is that, instead of the sequential $k^{th}$ encryption $E_k(Q_i)$ of the secret number $Q_i$, the commitment $Com_i^k(EVID)$ to the hard evidence $EVID$ serves as one of the arguments of the one way function $F$, while the second argument $IP(S_j)$ remains the same, i.e. $t_{ij} = F(Com_i^k(EVID) \oplus IP(S_j))$ (Fig. 4, lines 5-13, Protocol for User $U_i$). Therefore, the requirements ($R_1$) to ($R_4$) are satisfied as shown herein above for the $ATP_1$ protocol.

That ($R_5$), i.e. *Atomicity,* is also satisfied is shown as follows: Resolution of the $T_i^{l\,th}$ transaction is initiated and performed by $U_i$ by sending each $S_j \in S^{U_i}$ simultaneously the commitment to the hard instance $Com_i^k(EVID)$ in the $Resolve_i^l$ message. The transaction is resolved simultaneously if all the servers accept the ZKP that shows that $U_i$ surely knows the committed instance $EVID$. The $T_i^{l\,th}$ transaction is rejected simultaneously by all servers if at least one server $S_m \in S^{U_i}$ does not accept the ZKP (Fig. 4, lines 15-21, Protocol for Server $S_j$).

According to the $ATP_2$ protocol, in order to provide a user's permanent identity, the $TA$ must generate a hard to produce evidence $EVID$ and its solution, so it is computationally infeasible to produce and hence to guess $EVID$ in an adversarial manner. The inventor's propose turning to the difficulty of the prime numbers generation and the primality proof as an example of one method of producing such an $EVID$. As a matter of fact, the generation of large prime numbers is an extremely difficult problem [3] and therefore only an extremely wealthy authority such as a government is able to produce large primes.

Assume the proposed hard evidence $EVID$ is a very large prime number $P$ and also assume that the purpose of the user $U_i$ is to convince the servers from the $S^{U_i}$ set that $U_i$ anonymously interacted with each $S_j \in S^{U_i}$ and provided a $k^{th}$ transaction $T_i^k$ in a legitimate manner. The user $U_i$ acts as follows: he/she computes a commitment to $P$ for the $T_i^k$ transaction and proves in the $T_i^{k\,th}$ second phase (Fig. 4, line 18) that $P$ is a very large prime. A method by which the user can supply this proof is to use the ZKP proofs of primality proposed in either [2] or [11]. The ZKP protocols presented in these papers are based on the randomized primality tests which provide a very high confidence level of the committed number to be prime. The main advantage of these schemes is that the target number is not revealed, and only its commitment participates in the ZKP. Based on these results, the prime evidence $P$ granted to the user by the $TA$ is valid forever for any number of possible transactions. Hence, only commitment to $P$ is updated for a new transaction. In [2] the first efficient statistical ZKP protocol for proof that a committed number is pseudo prime is presented. A prover (in the context of the present invention a user) performs the correct computation of a modular addition, modular multiplication, or a modular exponentiation, where all values including the modulus are committed but not publicly available. The authors of [2] implement the randomized Lehmann primality test in Zero Knowledge (see [1]). The computational security power is based on the hardness of the discrete logarithm problem in finite groups [14].

The authors of [11] propose a more efficient ZKP of primality. The primality certificate is investigated based on the proof that a given number has only one prime factor and that it is square free. The algebraic settings are: Let $G = \langle g \rangle$ be a finite group of large known order $Q$ generated by g and let $h$ be a second group generator while the discrete logarithm $log_g h$ is unknown to the prover-user and the verifier-server.

A commitment scheme in [2] and [11] is as follows: In order to commit to any element $x$ that participated in the ZKP, the prover-user chooses a random number $r_x$ and sends the commitment on $x$ $c_x = g^x h^{r_x}$ to the verifier-sender. Given $c_x = g^x h^{r_x}$ it is computationally infeasible for the verifier or any other adversary to obtain any information about x, while it is infeasible to find different pairs ($x, r_x$ and $x', r_{x'}$ such that $c_x = g_x h^{r_x} = g^{x'} h^{r_{x'}}$ unless the prover can compute $log_h g$ (see [2], [11]). The ZKP of primality in [11] is provided in two phases: firstly, the prover proves that a committed number $P$ in $c_P = g^P h^{r_P}$ has only one prime factor; and next that $P$ is square free. The ZKP is based on the quadratic residues and the LaGrange theorem [1]. For example, in order to perform the secret modular computation $\forall a \in Q\ a^P = a(mod\ P)$,

the basic secret modular multiplication, exponentiation, and quadratic residue computations are provided. The Lehmann primality test in [2] is also based on these building blocks. The ZKP proves that $P$ is in a given range, and its upper bound may be as large as desired as presented in [11], which suits the $ATP_2$ embodiment of the invention.

The application of $ATP_2$ requires the users and the servers to deal with computations that are very long and, therefore requires them to be powerful machines as well.

Although embodiments of the invention have been described by way of illustration, it will be understood that the invention may be carried out with many variations, modifications, and adaptations, without exceeding the scope of the claims.

## Bibliography

[1] E. Bach, J. Shallit, "Algorithmic Number Theory" Volume 1: Efficient Algorithms, MIT Press, 1996.

[2] J. Camenisch, M. Michels, "Proving in Zero Knowledge that a Number is the Product of Two Safe Primes", Basic Research in Computer Science (BRICS) Report Series, 1998.

[3] Cooperative Computing Awards, http://w2.eff/org/awards/coop.php.

[4] A. Beimel, S. Dolev, "Buses for Anonymous Message Delivery", Journal of Cryptology, Volume 16, pages 25-39, 2003.

[5] S. Dolev, R. Ostrovsky, "Xor-Trees for Efficient Anonymous Multicast and Reception", ACM Transactons on Information and Syste Security, Volume 3, Number 2, pages 63-84,2000.

[6] U. Feige, A. Fiat, A. Shamir, "Zero-Knowledge Proofs of Identity", Journal ofCryptology, Volume 1, Number 2, Springer New York, 1988.

[7] E. Gabber, P. Gibbons, Y. Matias, A. Mayer, "How to Make Personalized Web Browsing Simple, Secure, and Anonymous", Financial Cryptography: First International Conference, Fc '97, Anguilla, 1997.

[8] O. Goldreich, "Foundations of Cryptography" Volume 1, Cambridge University Press, 2003.

[9] O. Goldreich, "foundations of Cryptography", Volume 2, Cambridge University Press, 2003.

[10] L. Lamport, "Password Authentication with Insecure Communication", Communications of the ACM, Volume 24, Number 11, 1981.

[11] T. V. Lee, K. Q. Nguyen, V. Varadharajan, "How to Prove that a Committed Number is Prime", Lecture Notes In Computer Science, Volume 1716, Proceedings of the International Conference on the Theory and Applications of Cryptology and Information Security Advances in Cryptology table, pages: 208 - 218, 1999.

[12] M. Naor, R. Ostrovsky, R. Venkatesan, M. Yung, "Perfect Zero-Knowledge Arguments for NP Using any One-Way Permutation", Advances in Cryptology- Crypto 92 Proceedings, Lecture Notes in Computer Science 740, Springer-Verlag, 1993.

[13] W. Stallings, "Network Security Essentials: Applications and Standards", Prentice Hall, 2007.

[14] D. R. Stingson, "Cryptography. Theory and Practice", Chapman and Hall/CRC, Third edition, 2006.

## Claims

1. A method for anonymously carrying out multiphase transactions over a distributed computer network that comprises a computer of a trusted authority, a user's computer, and servers of one or more service providers, wherein each of said computers/servers in said network comprises dedicated software that contains information, including a one-way function, and instructions necessary to execute said method, wherein said method is carried out as follows:

   a. the user's computer acts on behalf of the user to establish contact with the computer of the trusted authority;
   b. said computer of said trusted authority provides said user's computer with either:

      i. a secret random number; or
      ii. a hard to produce evidence;

   c. a transaction is started on behalf of the user by said user's computer which locally produces a unique pseudonym for each server of said one or more service provider that will be involved in the transaction, wherein said pseudonym is the output of said one-way function included on it's dedicated software which receives as an input either:

      i. said secret random number and the corresponding IP address of said server of said service provider; or

ii. a commitment to produce said hard to produce evidence and said corresponding IP address of said server of said service provider;

d. said user's computer uses said pseudonyms to communicate anonymously with said servers of said service providers;

e. said user's computer initiates the carrying out of said transaction on behalf of the user by sending a resolve message based on either:

i. said secret random number XOR said IP address of said server of said service provider; or
ii. said commitment to produce said hard to produce evidence to each of said servers;

f. said transaction is completed when:

i. each of said servers of said service providers sends said secret random number revealed from said resolve message sent to it by said user's computer in step e.i. to said computer of said trusted authority, which confirms to each of said servers that the same user has interacted with each of them; or
ii. said user's computer provides to each of said servers a computationally secure Interactive Zero Knowledge Proof ZKP, that proves that said user is the same anonymous identity that knows said evidence in said resolve message sent by said user's computer in step e.ii.

2. The method of claim 1, wherein the trusted authority limits the number of times that the secret random number provided to the user's computer can be used.

3. The method of claim 1, wherein, in step b the computer of the trusted authority provides the user's computer with a second secret random number, thereby allowing the transaction to be carried out in an unlinkable mode wherein the servers of the one or more service providers do not know that the same anonymous user previously requested a service from them.

4. The method of claim 1, wherein, if in step b the computer of the trusted authority has provided the user's computer with a secret random number, then the user can instruct his/her computer not to complete said transaction.

5. The method of claim 1, wherein the hard to produce evidence is a very large prime number.

**Patentansprüche**

1. Verfahren zur anonymen Durchführung mehrphasiger Transaktionen über ein verteiltes Computernetz, das einen Computer einer vertrauenswürdigen Stelle, einen Benutzercomputer und Server eines Dienstanbieters oder mehrerer Dienstanbieter umfasst, bei dem jeder der Computer/Server in diesem Netzwerk dedizierte Software umfasst, welche Informationen, einschließlich einer Einwegfunktion, und für die Durchführung des Verfahrens erforderliche Anweisungen enthält, wobei das Verfahren wie folgt durchgeführt wird:

a. Ein Benutzercomputer handelt im Namen des Benutzers, um Kontakt zu dem Computer der vertrauenswürdigen Stelle herzustellen;
b. der Computer der vertrauenswürdigen Stelle stellt dem Benutzercomputer entweder

i. eine geheime Zufallszahl oder
ii. einen schwer zu erzeugenden Beweis

zur Verfügung;
c. durch den Benutzercomputer wird im Namen des Benutzers eine Transaktion gestartet, die lokal ein einzigartiges Pseudonym für jeden Server des einen Dienstanbieters oder der mehreren Dienstanbieter, der/die an der Transaktion beteiligt sein wird/werden, erzeugt, wobei das Pseudonym die Ausgabe der in dessen dedizierter Software enthaltenen Einwegfunktion darstellt, die als Eingabe entweder

i. die geheime Zufallszahl und die entsprechende IP-Adresse des Servers des Dienstanbieters oder
ii. ein Commitment zur Erzeugung des schwer zu erzeugenden Beweises und die entsprechende IP-Adresse des Servers des Dienstanbieters

empfängt;

d. der Benutzercomputer verwendet die Pseudonyme, um anonym mit den Servern der Dienstanbieter zu kommunizieren;

e. der Benutzercomputer initiiert die Durchführung der Transaktion im Namen des Benutzers durch Senden einer Resolve-Nachricht basierend entweder auf

i. der geheimen Zufallszahl XOR der IP-Adresse des Servers des Dienstanbieters oder auf

ii. einem Commitment zur Erzeugung des schwer zu erzeugenden Beweises an jeden der Server;

f. die Transaktion ist abgeschlossen, wenn:

i. jeder der Server der Dienstanbieter die geheime Zufallszahl, welche durch die ihm von dem Benutzercomputer in Schritt e.i. gesendete Resolve-Nachricht aufgedeckt wurde, an den Computer der vertrauenswürdigen Stelle sendet, welcher jedem der Server bestätigt, dass derselbe Benutzer mit jedem der Server interagiert hat, oder

ii. der Benutzercomputer jedem der Server einen berechenbar sicheren interaktiven Zero-Knowledge-Beweis ZKP zur Verfügung stellt, welcher beweist, dass der Anwender dieselbe anonyme Identität ist, die den Beweis in der von dem Benutzercomputer in Schritt e.ii. gesendeten Resolve-Nachricht kennt.

2. Verfahren nach Anspruch 1, bei welchem die vertrauenswürdige Stelle die Anzahl der Male, in denen die dem Benutzercomputer zur Verfügung gestellte geheime Zufallszahl verwendet werden kann, beschränkt.

3. Verfahren nach Anspruch 1, bei welchem, in Schritt b, der Computer der vertrauenswürdigen Stelle dem Benutzercomputer eine zweite geheime Zufallszahl bereitstellt, wodurch die Durchführung der Transaktion in einem unverkettbaren Modus ermöglicht wird, wobei die Server des einen Dienstanbieters oder der mehreren Dienstanbieter nicht wissen, dass zuvor derselbe anonyme Benutzer einen Dienst bei ihnen angefordert hat.

4. Verfahren nach Anspruch 1, bei welchem falls in Schritt b der Computer der vertrauenswürdigen Stelle dem Benutzercomputer eine geheime Zufallszahl zur Verfügung gestellt hat, dieser Benutzer seinen Computer anweisen kann, die Transaktion nicht abzuschließen.

5. Verfahren nach Anspruch 1, bei welchem der schwer zu erzeugende Beweis eine sehr große Primzahl ist.

## Revendications

1. Un procédé d'exécution anonyme de transactions à phases multiples par l'intermédiaire d'un réseau informatique réparti qui comprend un ordinateur d'une autorité de confiance, un ordinateur d'utilisateur et des serveurs d'un ou de plusieurs fournisseurs de services, dans lequel chacun desdits ordinateurs/serveurs dans ledit réseau comprend un logiciel dédié qui contient des informations comprenant une fonction unidirectionnelle et des instructions nécessaires à l'exécution dudit procédé, ledit procédé étant exécuté comme suit :

a. l'ordinateur d'utilisateur agit au nom de l'utilisateur de façon à établir un contact avec l'ordinateur de l'autorité de confiance,

b. ledit ordinateur de ladite autorité de confiance fournit audit ordinateur d'utilisateur soit :

i. un nombre aléatoire secret, ou

ii. une preuve difficile à produire,

c. une transaction est lancée au nom de l'utilisateur par ledit ordinateur d'utilisateur qui produit localement un pseudonyme unique pour chaque serveur desdits un ou plusieurs fournisseurs de services qui sont impliqués dans la transaction, ledit pseudonyme étant la sortie de ladite fonction unidirectionnelle incluse dans son logiciel dédié qui reçoit en tant qu'entrée soit :

i. ledit nombre aléatoire secret et l'adresse IP correspondante dudit serveur dudit fournisseur de services, ou

ii. un engagement à produire ladite preuve difficile à produire et ladite adresse IP correspondante dudit serveur dudit fournisseur de services,

d. ledit ordinateur d'utilisateur utilise lesdits pseudonymes de façon à communiquer de manière anonyme avec lesdits serveurs desdits fournisseurs de services,

e. ledit ordinateur d'utilisateur lance l'exécution de ladite transaction au nom de l'utilisateur par l'envoi d'un message de résolution basé sur soit :

>   i. ledit nombre aléatoire secret XOR ladite adresse IP dudit serveur dudit fournisseur de services, ou
>   ii. ledit engagement à produire ladite preuve difficile à produire à chacun desdits serveurs,

f. ladite transaction est achevée lorsque :

>   i. chacun desdits serveurs desdits fournisseurs de services envoie ledit nombre aléatoire secret révélé par ledit message de résolution envoyé à celui-ci par ledit ordinateur d'utilisateur à l'étape e.i. audit ordinateur de ladite autorité de confiance, qui confirme à chacun desdits serveurs que le même utilisateur a interagi avec chacun d'eux, ou
>   ii. ledit ordinateur d'utilisateur fournit à chacun desdits serveurs une preuve à connaissance nulle ZKP interactive informatiquement sûre qui prouve que ledit utilisateur est la même entité anonyme qui connait ladite preuve dudit message de résolution envoyé par ledit ordinateur d'utilisateur à l'étape e.ii.

2. Le procédé selon la revendication 1, dans lequel l'autorité de confiance limite le nombre de fois que le nombre aléatoire secret fourni à l'ordinateur d'utilisateur peut être utilisé.

3. Le procédé selon la revendication 1, dans lequel, à l'étape b, l'ordinateur de l'autorité de confiance fournit à l'ordinateur d'utilisateur un deuxième nombre aléatoire secret, autorisant ainsi la transaction à être exécutée dans un mode ne pouvant pas être relié dans lequel les serveurs des un ou plusieurs fournisseurs de services ne savent pas que le même utilisateur anonyme leur a demandé précédemment un service.

4. Le procédé selon la revendication 1, dans lequel, si à l'étape b l'ordinateur de l'autorité de confiance a fourni à l'ordinateur d'utilisateur un nombre aléatoire secret, alors l'utilisateur peut ordonner à son ordinateur de ne pas achever ladite transaction.

5. Le procédé selon la revendication 1, dans lequel la preuve difficile à produire est un très grand nombre premier.

Fig. 1a

Fig. 1b

Fig. 1c

Fig. 1d

| *ATP*$_1$. Protocol for User $U_l$ | *ATP*$_1$. Protocol for Server $S_j$ |
|---|---|
| 1: Initialization: | |
| 2: Get $(Q_b\ t)$ | 1: |
| 3: from *TA* | 2: |
| 4: int $k = 1$ | 3: |
| 5: Start $k^{th}$ transaction $T_l^k$ | 4: |
| 6: User's $U_l$ authentication | 5: |
| | 6: |
| 7: $S^U_l$     to any $S_j$ | 7: |
| 8: for $j = 1..m$ | 8: |
| 9: $F_{ij} = F(Q_l^k \circledast IP(S_j))$ | 9: |
| 10: $F_{ij} = (u_{ij} \| p_{ij})$ | 10: |
| 11: *Pseudonym*$_{ij} = (u_{ij} \| p_{ij})$ | 11: |
| 12: Send $t_{ij} = Pseudonym_{ij}$ to $S_j$ | 12: Upon reception of $t_{ij}$ |
| 13: End user's $U_l$ authentication | 13: Confirm $U_l^{th}$ authentication |
| | |
| 14: $k^{th}$ Transaction Resolution | 14: $k^{th}$ Transaction Resolution |
| 15: *Resolve*$_l^k = (Q_l^k \circledast IP(S_j))$ | 15: Upon reception of *Resolve*$_l^k$ |
| 16: Send *Resolve*$_l^k$ to all $S_j$ from $S^U_l$ | 16: |
| 17: If $r_l = Confirm_l^k$ | 17: If *TA(Resolve*$_l^k$)$= Confirm_l^k$ |
| 18: return | 18: Send $r_l = Confirm_l^k$ to $U_l$ |
| 19: *Transaction Resolution* | 19: |
| 20: else | 20: If *TA(Resolve*$_l^k$)$= Reject_l^k$ |
| 21: return | 21: Send $r_l = Reject_l^k$ to $U_l$ |
| 22: *Transaction Failure* | 22: |
| 23: if $k <t$ $k := k + 1$ | 23: if $k <t$ $k := k + 1$ |
| 24: else Last Transaction | 24: else Last Transaction |

# Fig. 2

Fig. 3a

Fig. 3b

Fig. 3c

| ATP₂. Protocol for User $U_i$ | ATP₂. Protocol for Server $S_j$ |
|---|---|
| 1: Initialization: | |
| 2: Get *EV ID* | 1: |
| 3: from *TA* | 2: |
| 4: int $k = 1$ | 3: |
| 5: Start $k^{th}$ transaction $T_i^k$ | 4: |
| 6: User's $U_i$ authentication | 5: |
| | 6: |
| 7: $S^U_i$ to any $S_j$ | 7: |
| 8: for $j = 1..m$ | 8: |
| 9: $F_{ij} = F(Com_i^k(EV\,ID)$ $\oplus IP(S_j))$ | 9: |
| 10: $F_{ij} = (u_{ij} \| p_{ij})$ | 10: |
| 11: $Pseudonym_{ij} = (u_{ij} \| p_{ij})$ | 11: |
| 12: Send $t_{ij} = Pseudonym_{ij}$ to $S_j$ | 12: |
| 13: End user's $U_i$ authentication | 13: Upon reception of $t_{ij}$ |
| 14: | 14: Confirm $U_i^{th}$ authentication |
| 15: $k^{th}$ Transaction Resolution | 15: $k^{th}$ Transaction Resolution |
| 16: $Resolve_i^k = Com_i^k(EV\,ID)$ | 16: Upon reception of $Resolve_i^k$ |
| 17: Send $Resolve_i^k$ to all $S_j$ from $S^U_i$ | 17: Provide ZKP $U_i$ knows *EV ID* |
| 18: Provide ZKP that $U_i$ knows *EV ID* | 18: If ZKP correct |
| 19: If $r_i = Confirm_i^k$ | 19: Send $r_i = Confirm_i^k$ to $U_i$ |
| 20: return | 20: else |
| 21: *Transaction Resolution* | 21: Send $r_i = Reject_i^k$ to $U_i$ |
| 22: else | 22: |
| 23: return | 23: |
| 24: *Transaction Failure* | 24: |
| 25: $k := k + 1$ | 25: $k := k + 1$ |
| 26: if $k \nless t$ $k := k + 1$ | 26: if $k \nless t$ $k := k + 1$ |
| 27: else Last Transaction | 27: else Last Transaction |

# Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2002103999 A1

- EP 2012248 A2

### Non-patent literature cited in the description

- **D. CHAUM ; J. H. EVERTSE.** A Secure and Privacy Protecting Protocol for Transmitting Personal Information between Organizations. *Advances in Cryptology- CRYPTO'86, LNCS,* 1987, vol. 163, 118-167
- Algorithmic Number Theory. **E. BACH ; J. SHALLIT.** Efficient Algorithms. MIT Press, 1996, vol. 1
- **J. CAMENISCH ; M. MICHELS.** Proving in Zero Knowledge that a Number is the Product of Two Safe Primes. *Basic Research in Computer Science (BRICS) Report Series,* 1998
- **A. BEIMEL ; S. DOLEV.** Buses for Anonymous Message Delivery. *Journal of Cryptology,* 2003, vol. 16, 25-39
- **S. DOLEV ; R. OSTROVSKY.** Xor-Trees for Efficient Anonymous Multicast and Reception. *ACM Transactons on Information and Syste Security,* 2000, vol. 3 (2), 63-84
- Zero-Knowledge Proofs of Identity. **U. FEIGE ; A. FIAT ; A. SHAMIR.** Journal ofCryptology. Springer New York, 1988, vol. 1
- **E. GABBER ; P. GIBBONS ; Y. MATIAS ; A. MAYER.** How to Make Personalized Web Browsing Simple, Secure, and Anonymous. *Financial Cryptography: First International Conference, Fc '97, Anguilla,* 1997

- **O. GOLDREICH.** Foundations of Cryptography. Cambridge University Press, 2003, vol. 1
- **O. GOLDREICH.** foundations of Cryptography. Cambridge University Press, 2003, vol. 2
- **L. LAMPORT.** Password Authentication with Insecure Communication. *Communications of the ACM,* 1981, vol. 24 (11
- **T. V. LEE ; K. Q. NGUYEN ; V. VARADHARAJAN.** Proceedings of the International Conference on the Theory and Applications of Cryptology and Information Security Advances in Cryptology table. *How to Prove that a Committed Number is Prime", Lecture Notes In Computer Science,* 1999, vol. 1716, 208-218
- Perfect Zero-Knowledge Arguments for NP Using any One-Way Permutation. **M. NAOR ; R. OSTROVSKY ; R. VENKATESAN ; M. YUNG.** Advances in Cryptology- Crypto 92 Proceedings, Lecture Notes in Computer Science. Springer-Verlag, 1993, vol. 740
- **W. STALLINGS.** Network Security Essentials: Applications and Standards. Prentice Hall, 2007
- **D. R. STINGSON.** Cryptography. Theory and Practice. Chapman and Hall/CRC, 2006